# EUROPEAN PATENT APPLICATION

(11) **EP 2 605 317 A1**
(43) Date of publication of application: **19.06.2013**
(21) Application number: 10846305.0
(22) Date of filing: 24.11.2010
(51) Int. Cl.: H01M 4/58

(54) **DOPING POSITIVE MATERIAL FOR HIGH VOLTAGE LITHIUM ION BATTERY**

(30) Priority: 10.08.2010 CN 201010249158
(71) Applicant: Citic Guoan Mengguli New Energy Technology Co., Ltd., Changping District Beijing 102200 (CN)
(72) Inventor: WU, Ningning, Beijing 102200 (CN); TENG, Guopeng, Beijing 102200 (CN); SONG, Wene, Beijing 102200 (CN); CHEN, Yuan, Beijing 102200 (CN); WANG, Yahe, Beijing 102200 (CN); GE, Huanzeng, Beijing 102200 (CN)
(74) Representative: Jeannet, Olivier
(86) International application number: PCT/CN2010/079097
(87) International publication number: WO 2012/019399

(57) **Abstract**

The present invention advantageously provides a high-voltage lithium battery cathode material and its general formula for the composition of the high-voltage lithium battery cathode material presented in this invention:

LiMn_{1.5}Ni₀._{5-X}M_{X}O₄

Of which: 0 <X ≤ 0.2, M represents one or several elements comprised by copper, zinc, magnesium, aluminum, cadmium, zirconium, and titanium.
The present invention relates to a high-voltage lithium battery cathode material, which utilizes the liquid-phase co-precipitation method to dope transition metal elements, so that all elements could be mixed at the atomic level and obtain a relatively uniform product, stabilizing the crystal structure, avoiding the capacity attenuation caused by structure collapse in the material cyclic process; in addition, this invention has also increased the conductivity, improved the capacity of 5V platform, thereby avoiding the substantial damage to the battery system resulted from the decomposition of the electrolyte. Thus, a newly high-voltage lithium battery cathode material featured with good electrochemical properties and cycle performance has been proposed in the present invention; moreover, the utilization of liquid-phase co-precipitation has the advantages of simple synthesis method, convenient operation process, easier to control, high yield coefficient, low energy consumption, and easy-to-industrial production.

## Description

### FIELD OF THE INVENTION

This invention relates to a lithium-ion battery material, and particular to a high voltage lithium battery cathode material.

### BACKGROUND OF THE INVENTION

The voltage of the currently used cathode materials for Li-ion battery, such as LiCoO₂, LiMn₂O₄ and new nickel-cobalt-manganese ternary materials is approximately 4V, which has restricted the battery power. Furthermore, the cost of cobalt-based cathode materials is prohibitive due to the scarce of cobalt resources, and hence which is probable not being widely used in large power tools. Although Li-Mn-O is featured with the advantages of rich resources, relatively lower cost, safe and non-polluting, its poor stability under high-temperature circulation, and serious capacity fading problems have not been solved perfectly till now, resulting in the difficulties for its commercial production.

In the study of the modification related to LiMn₂O₄, it was found that the LiMn_{2-X}M_{X}O₄ (M = Cr, Co, Ni, Cu, Fe, Mo, V) substituted by the transition metals performed significantly better than LiMn₂O₄, and the LiMn_{2-X}M_{X}O₄ material turned up a discharge platform in the vicinity of 5V with the increase in the doping amount of transition metals. With respect to these spinel LiMn_{2-X}M_{X}O₄ materials, LiMn_{1.5}M_{0.5}O₄ has been widely appreciated due to the relatively better cycle performance and high capacity. Its theoretical capacity is 147mAh/g, and its energy density is 690Wh/kg. However, the pure LiMn_{1.5}M_{0.5}O₄ material may take place the collapse of spinel structure due to the dissolution of manganese in the discharge process, and also turn up the Yang - Thai effects and electrolyte decomposition, resulting in the relatively fast fading of its capacity.

Currently, the preparation methods of high-voltage lithium-ion battery cathode materials include Sol-Gel method, molten-salt growth method, composite carbonate method, emulsion drying method, ultrasonic spray pyrolysis and conventional solid state method, etc. However, the synthetic materials derived from the aforesaid methods should properly resolve the following issues, including lower initial discharge capacity, poor cycle stability, lower reaction yield, inconvenient operation and so forth.

### SUMMARY OF THE INVENTION

In view of the above-described problems and to meet the production requirements of high-voltage lithium-ion battery, the present invention advantageously provides a high-voltage lithium battery cathode material and its preparation method.

The general formula for the composition of the high-voltage lithium battery cathode material presented in this invention:

LiMn _{1.5} Ni _{0.5-X} M _{X} O₄ LiMn _{1.5} Ni _{0.5-X} M X O₄

Of which: 0 <X ≤ 0.2, M represents one or several elements comprised by copper, zinc, magnesium, aluminum, cadmium, zirconium, and titanium.

The morphology of the described high-voltage lithium battery cathode material is spherical large particles agglomerated by a number of single-crystal particles, presenting as a cubic spinel (Fd-3m) crystal structure.

The described high-voltage lithium battery cathode material is prepared in accordance with the following process steps:
1) A kind of soluble-salt mixed auqeous solution I, with the metal ion concentration of 0.5-2.0mol/L (preferably of 0.8 ∼ 1.2 mol/L, and superior of 1.0 mol/L), is prepared by soluble manganese salts, soluble nickel salts and soluble salts doped by metal M in line with the molar ratio among Mn: Ni: M of 1.5: (0.5-X): X, (thereinto, 0 <X ≤ 0.2). Of which, M represents one or several elements comprised by copper, zinc, magnesium, aluminum, cadmium, zirconium, and titanium;
2) A kind of mixed solution II is prepared by the ammonia and sodium hydroxide solution of 1.0-4.0mo1/L in line with the volume ratio of 1: (5-15);
3) The above-described soluble-salt mixed solution I and mixed solution II are uniformly and continuously added to the reactor for reaction, controlling the reaction ph value of 9-11, and the reaction temperature of 40-60°C. Meanwhile, stirring in the reaction process, continue stirring 0,5-5 hours after feeding, to get the aqueous solution of soluble salt reaction products (such as Na₂SO₄, (NH₄)₂SO₄, NaCl, NH₄Cl, etc., including but not limited to, depending on the materials used), and the mixed materials of solid precipitate (Ni_{0.5}Mn_{1.5} (OH)4). Theoretically, the precipitation process is carried out in accordance with the following course of reaction:

   Ni²⁺ (aq.)+Mn²⁺ (aq.)+4OH⁻(aq.) → Ni_{0.5}Mn_{1.5}(OH)₄(S) Ni²⁺ (aq.) ⁺ Mn²⁺ (aq.) +4OH⁻(aq.) → Ni_{0.5}Mn_{1.5} (OH)₄(S)
4) The above-described mixed materials are filtered, and then washed off solid products with deionized water, proceeding to the drying step to obtain the hydroxide precursor of spherical or spherical-like nickel, Manganese, and M.
5) A kind of dried mixture is prepared by uniformly mixing the above-described hydroxide precursor and lithium salt in line with the molar ratio between Li and Mn + Ni + M of 0.5-0.55:1, or uniformly mixing in deionized water and absolute ethyl alcohol, and then drying the corresponding products.
6) A kind of dark red intermediate product with incomplete crystallization is prepared by putting the above-described dried mixture under constant temperature at 400-600 °C. for 0.5-10 hours. In theory, the intermediate product has the stoichiometric composition of LiMn_{1.5}Ni₀._{5-X}M_{X}O₄ + Y (Y ≥ 0). Grinding the above-described intermediate product after cooling, calcining it under the constant calcination temperature of 800-1000°C. for 5-20 hours, through 200-mesh sieve after cooling and grinding to get the final product, the main purpose of this process is to obtain good crystallization of the intermediate product and endue the metal ions with a certain energy so as to move to appropriate position within the crystal lattice, but also contains certain secondary recrystallization process.

The above-described soluble Ni-salts include: NH₄NiCl₃, Ni (NH₄)₂(SO₄)₂, NiBr₂, Ni (ClO₃)₂, NiCl₂, NiF₂, NiI₂, Ni (NO₃)₂, and NiSO₄, preference is given to one or several comprised by Ni (NH₄)₂(SO₄)₂, NiCl₂, and NiSO₄.

The above-described soluble Mn-salts include: Mn(C₂H₃O₂)_{2,} MnBr₂, MnCl₂, MnF₂, MnI₂, Mn(NO₃) ₂, MnSO₄, Mn(C₂H₃O₂)₃, Mn₂O₇; preference is given to one or several comprised by MnCl₂, MnSO₄, and Mn (NO₃)₂.

The above-described soluble Li-salts include: LiC₂H₃O₂, LiBrO₃, LiBr, Li₂CO₃, LiClO₃, LiCl, Li₃C₆H₅O₇, LiF, Li (CHO₂), LiHCO₃, LiOH, LiOCl , LiIO₃, LiI, Li₂C₂O₄, LiClO, Li₂SO₄, and Li₂S; preference is given to one or several comprised by Li₂CO₃ and LiOH.

M soluble salts refer to one or several comprised by M-halogenide, M-sulfate, M-nitrate or other water-soluble salts, specifically comprising:
CuCl, CuBr, CuF, CuI, CuBr₂, CuCl₂, Cu(NO₃)₂;
Zn(BrO₃)₂, ZnBr, ZnCl₂, Zn(BF₄)2, ZnI₂, Zn(NO₂)₂;
MgBr₂, MgCl₂, MgF₂, MgI₂, Mg(NO₃)₂, MgSO₄ ;
AlBr₃, Al(C1O₃)₃, AlCl₃, AlCl(C₄H₉)₂, AlF₃, Al₂(SiF₆)₃, AlI₃, Al(NO₃)₃, Al(ClO₄)₃, Al₂(SO₄)₃ ;
Cd(C₂H₃O₂)₂, CdBr₂, CdCl₂, CdI₂, Cd(NO₃)₄, CdSO₄ , Cd(BF₄)₂;
ZrBr₂, ZrCl₂, ZrF₂, ZrI₂, ZrI₄ , Zr(NO₃)₄, Zr(SO₄)₂, ZrOCl₂;
TiBr₃, Ti(SO₄)₂;

Preference is given to one or several comprised by CuCl, CuCl₂, ZnCl₂, MgSO₄, AlCl₃, CdSO₄, ZrCl₂, and Ti(SO₄)₂.

The preferable molar ratio of Mn: Ni: M in the above-described Step 1) is 1.5: (0.5-X): X, while the preferable parameter 0.05 <X≤0.15, and the optimal parameter is 0.08 <X ≤ 0.12.

The preferable concentration of metal ions in the soluble salt mixed aqueous solution I described in Step 1) is 0.8 ∼ 1.2 mol/L, while the optimal parameter is 1.0 mol/L.

The preferable reaction ph value described in Step 3) is 10.0, and the preferable reaction temperature is 55°C.

The specific filtering process described in Step 4) is: apply certain pressure difference at both ends of the filtering media made of fabric or filter paper, and pour the mixture from the high-pressure side. Since the effect of the pressure difference, the aqueous solution will be run out from the low pressure side, while the solid products will be trapped in the filter media and accumulated until the end of the filtering process, so as to separate the solid-liquid mixture described in Step 3).

This invention relates to a high-voltage lithium battery cathode material, which utilizes the liquid phase precipitation method to dope transition metal elements, so that all elements could be mixed at the atomic level and obtain a relatively uniform product, stabilizing the crystal structure, avoiding the capacity attenuation caused by structure collapse in the material cyclic process; in addition, this invention has also increased the conductivity, improved the capacity of 5V platform, thereby avoiding the substantial damage to the battery system resulted from the decomposition of the electrolyte. Thus, the newly proposed high-voltage lithium battery cathode material is featured with good electrochemical properties, and has greatly improved the cycle performance compared to the unmodified high-voltage lithium-ion battery cathode materials. Moreover, this newly proposed high-voltage lithium battery cathode material also has the advantages of simple synthesis method, convenient operation process, easier to control, high yield coefficient, low energy consumption, and easy-to-industrial production.

### BRIEF DESCRIPTION OF THE DRAWINGS

FIG. 1 is the XRD pattern of the high-voltage lithium battery cathode material in accordance with the principles of the present invention;
FIG. 2 is the SEM pattern of the high-voltage lithium battery cathode material in accordance with the principles of the present invention;
FIG. 3 is the initial charge and discharge curve of the high-voltage lithium battery cathode material in accordance with the principles of the present invention;
FIG. 4 is the cycle performance chart of the high-voltage lithium battery cathode material in accordance with the principles of the present invention;
FIG. 5 is the charge and discharge curves of contrastive materials;
FIG. 6 is the cycle performance chart of contrastive materials;

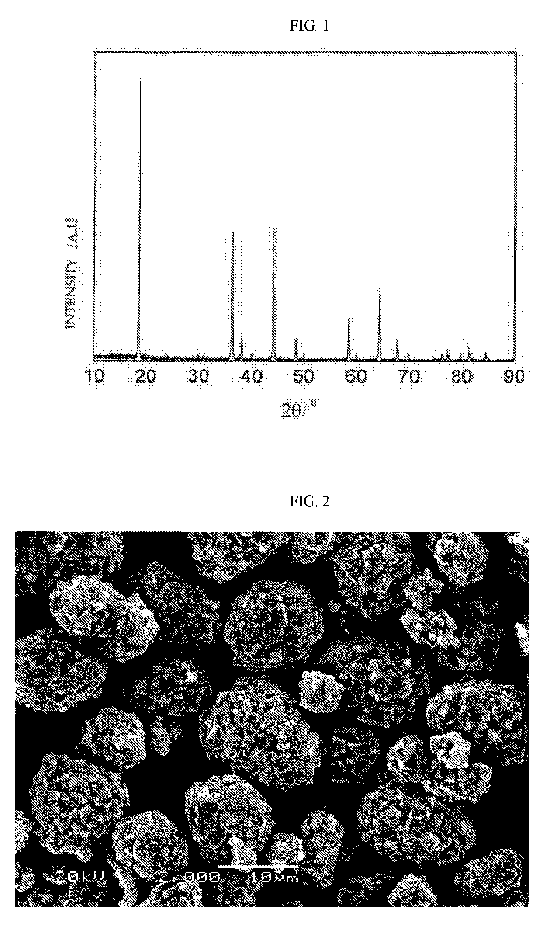

Of which: FIG. 2 is the summary drawing.

### MODE OF CARRYING OUT THE INVENTION

### Embodiment Example 1:

A 3000ml soluble salt mixed solution was prepared by 4.5mol manganese sulfate, 1.38mol nickel sulfate, and 0.12mol copper sulfate, and a 3000ml mixed solvent was prepared by 12.0mol sodium hydroxide and 280ml ammonia. The above-described soluble salt mixed solution and mixed solvent were added into a 10L reactor at the same rate of 3.0ml/min, controlling the reaction temperature of 50°C., and the ph value of 9,0, continuously stirring until the end of the reaction, and then stirring for 0,5 hours after the end of the reaction, the obtained black precipitate would be separated, filtered, and dried to get the precursor. A 200g of precursor was uniformly mixed with lithium hydroxide in line with the molar ratio between the Li: (Mn + Ni + Cu) of 0.5, blending with absolute ethyl alcohol, and then drying; the obtained product was dried for 2 hours under constant temperature of 500°C., cooling and grinding, and then calcining at 950°C. for 7 hours. After cooling and grinding, through 200-mesh sieve to get a black high-voltage lithium-ion battery cathode material.

The tap density of the prepared material was 2.2g/cm³. If the charge and discharge current density is 0.5mA/cm² the initial discharge capacity is up to 134.6mA/g. In addition, if the charge and discharge current density is 2.0mA/cm², the relative initial capacity would not be attenuated after 200 cycles.

### Embodiment Example 2:

A 3000ml soluble salt mixed solution was prepared by 3.0 mol manganese sulfate, 0.92 mol nickel chloride, and 0.08 mol magnesium chloride, and a 3000ml mixed solvent was prepared by 8.0 mol sodium hydroxide and 300ml ammonia. The above-described soluble salt mixed solution and mixed solvent were added into a 10L reactor at the same rate of 5.0ml/min, controlling the reaction temperature of 55°C., and the ph value of 10.0, continuously stirring until the end of the reaction, the obtained black precipitate would be separated, washed three times with deionized water, filtered, and dried to get the precursor. A 200g of precursor was uniformly mixed with lithium carbonate in line with the molar ratio between the Li: (Mn+Ni+Mg) of 0.51, blending with deionized water, and then drying; the obtained product was dried for 2 hours under constant temperature of 500°C., cooling and grinding, and then calcining at 850°C. for 10 hours. After cooling and grinding, through 200-mesh sieve to get a black high-voltage lithium-ion battery cathode material.

The tap density of the prepared material was 2.0g/cm³. If the charge and discharge current density is 0.5mA/cm², the initial discharge capacity is up to 130mA/g. In addition, if the charge and discharge current density is 2.0mA/cm², the capacity retention rate would be 95% after 200 cycles.

### Comparison Example 1:

A 3.0mol manganese dioxide, 0.92mol nickel hydroxide, 0.08mol copper acetate and 2.0mol lithium hydroxides were mixed uniformly, adding the organic alcohol solvent, blending and drying. The obtained product was dried for 2 hours under constant temperature of 500°C., cooling and grinding, and then calcining at 850°C. for 7 hours. After cooling and grinding, through 200-mesh sieve to get a black high-voltage lithium-ion battery cathode material.

The tap density of the prepared material was 2.19g/cm³. If the charge and discharge current density is 0.5mA/cm², the initial discharge capacity is up to 123.2mA/g. In addition, if the charge and discharge current density is 2.0mA/cm², the capacity retention rate would be 97.5% after100 cycles.

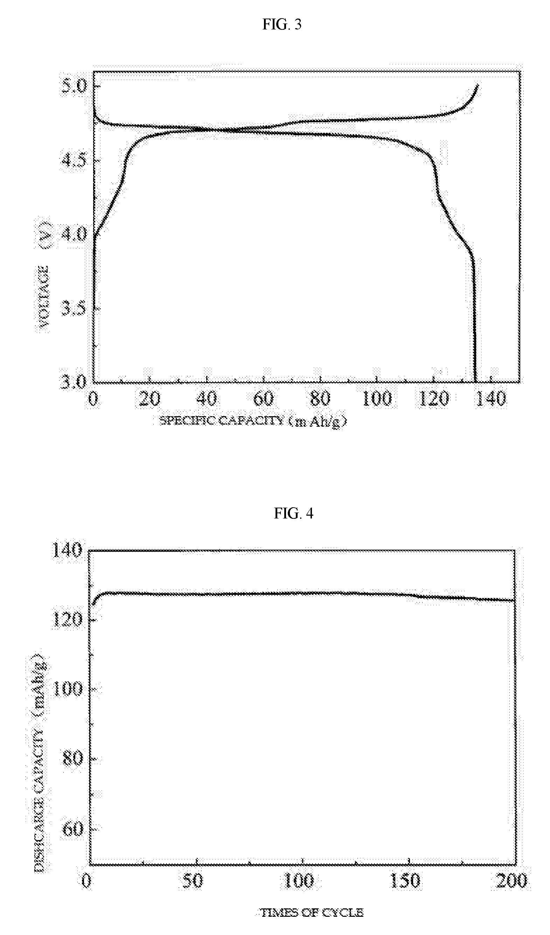

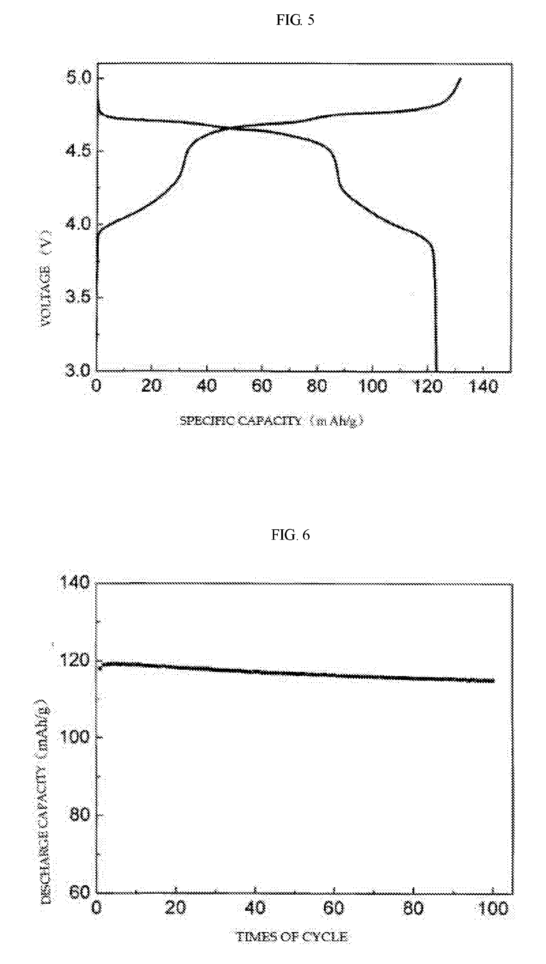

As illustrated in FIG. 3, FIG. 4, FIG. 5, FIG. 6, from the contrast of embodiment examples and comparison example, the 5V cathode material prepared by virtue of liquid-phase coprecipitation approach has significantly increased the initial discharge capacity and cycle performance compared relative to the conventional solid-phase method, increasing the capacity of the 5V platform while reducing the capacity of 4V platform simultaneously.

### INDUSTRIAL APPLICABILITY

The present invention relates to a high-voltage lithium battery cathode material, which utilizes the liquid-phase co-precipitation method to dope transition metal elements, so that all elements could be mixed at the atomic level and obtain a relatively uniform product, stabilizing the crystal structure, avoiding the capacity attenuation caused by structure collapse in the material cyclic process; in addition, this invention has also increased the conductivity, improved the capacity of 5V platform, thereby avoiding the substantial damage to the battery system resulted from the decomposition of the electrolyte. Thus, a newly high-voltage lithium battery cathode material featured with good electrochemical properties and cycle performance has been proposed in the present invention; moreover, the utilization of liquid-phase co-precipitation has the advantages of simple synthesis method, convenient operation process, easier to control, high yield coefficient, low energy consumption, and easy-to-industrial production.

## Claims

1. the present invention relates to a high-voltage lithium battery cathode material, wherein said: the general formula for the composition of the high-voltage lithium battery cathode material presented in this invention:
LiMn_{1.5}Ni_{0.5-X}M_{X}O₄
Of which: 0 <X ≤ 0.2, M represents one or several elements comprised by copper, zinc, magnesium, aluminum, cadmium, zirconium, and titanium.

2. In accordance with the high-voltage lithium battery cathode material described in Claim 1, wherein said: The morphology of the described high-voltage lithium battery cathode material is spherical large particles agglomerated by a number of single-crystal particles, presenting as a cubic spinel (Fd-3m) crystal structure.

3. In accordance with the preparation method of a high-voltage lithium battery cathode material, wherein said: the described high-voltage lithium battery cathode material is prepared in line with the following process steps:
1) A kind of soluble-salt mixed auqeous solution I, with the metal ion concentration of 0.5-2.0mol/L (preferably of 0.8 ∼ 1.2 mol/L, and superior of 1.0 mol/L), is prepared by soluble manganese salts, soluble nickel salts and soluble salts doped by metal M in line with the molar ratio among Mn: Ni: M of 1.5: (0.5-X): X, (thereinto, 0 <X ≤ 0.2). Of which, M represents one or several elements comprised by copper, zinc, magnesium, aluminum, cadmium, zirconium, and titanium;
2) A kind of mixed solution II is prepared by the ammonia and sodium hydroxide solution of 1.0-4.0mol/L in line with the volume ratio of 1: (5-15);
3) The above-described soluble-salt mixed solution I and mixed solution II are uniformly and continuously added to the reactor for reaction, controlling the reaction ph value of 9-11, and the reaction temperature of 40-60 °C. Meanwhile, stirring in the reaction process, continue stirring 0.5-5 hours after feeding, to get the aqueous solution of soluble salt reaction products and the mixed materials of solid precipitate.
4) The above-described mixed materials are filtered, and then washed off solid products with deionized water, proceeding to the drying step to obtain the hydroxide precursor of spherical or spherical-like nickel, Manganese, and M.
5) A kind of dried mixture is prepared by uniformly mixing the above-described hydroxide precursor and lithium salt in line with the molar ratio between Li and Mn + Ni + M of 0.5-0.55:1, or uniformly mixing in deionized water and absolute ethyl alcohol, and then drying the corresponding products.
6) A kind of dark red intermediate product with incomplete crystallization is prepared by putting the above-described dried mixture under constant temperature at 400-600 °C for 0.5-10 hours. Grind the above-described intermediate product after cooling, calcining it under the constant calcination temperature of 800-1000 °C for 5-20 hours, through 200-mesh sieve after cooling and grinding to get the final product.

4. In accordance with the preparation method of a high-voltage lithium battery cathode material described in **Claim 3,** wherein said: the above-described soluble Ni-salts include: NH₄NiCl₃, Ni(NH₄)₂(SO₄)₂, NiBr₂, Ni(ClO₃)₂, NiCl₂, NiF₂, NiI₂, Ni(NO₃)₂, and NiSO₄; preference is given to one or several comprised by Ni(NH₄)₂(SO₄)₂, NiCl₂ and NiSO₄.

5. In accordance with the preparation method of a high-voltage lithium battery cathode material described in **Claim 4,** wherein said: the above-described soluble Mn-salts include: Mn(C₂H₃O₂)₂, MnBr₂, MnCl₂, MnF₂, MnI₂, Mn(NO₃)₂, MnSO₄, Mn(C₂H₃O₂)₃, and Mn₂O_{7;} preference is given to one or several comprised by MnCl₂, MnSO₄ and Mn(NO₃)₂.

6. In accordance with the preparation method of a high-voltage lithium battery cathode material described in **Claim 5,** wherein said: the above-described soluble Li-salts include: LiC₂H₃O₂, LiBrO₃, LiBr, Li₂CO₃, LiClO₃, LiCl, Li₃C₆H₅O₇, LiF, Li (CHO₂), LiHCO₃, LiOH, LiOCl , LiIO₃, LiI, Li₂C₂O₄, LiClO, Li₂SO₄, and Li₂S; preference is given to one or several comprised by Li₂CO₃ and LiOH.

7. In accordance with the preparation method of a high-voltage lithium battery cathode material described in **Claim 6,** wherein said: M soluble salts refer to one or several comprised by M-halogenide, M-sulfate, M-nitrate or other water-soluble salts, specifically comprising:
CuCl, CuBr, CuF, CuI, CuBr₂, CuCl₂. Cu(NO₃)₂
Zn(BrO₃)₂, ZnBr, ZnCl₂, Zn(BF₄)₂, ZnI₂. Zn(NO₂)₂
MgBr₂, MgCl₂. MgF₂, MgI₂, Mg(NO₃)₂, MgSO₄
AlBr₃, Al(ClO₃)₃, AlCl₃, AlCl(C₄H₉)₂, AlF₃, Al₂(SiF₆)₃, AlI₃. Al(NO₃)₃, Al(ClO₄)₃, Al₂(SO₄)₃
Cd(C₂H₃O₂)₂, CdBr₂, CdCl₂. CdI₂, Cd(NO₃)₂, CdSO₄, Cd(BF₄)₂
ZrBr₂, ZrCl₂, ZrF₂, ZrI₂, ZrI₄, Zr(NO₃)₄, Zr(SO₄)₂, ZrOCl₂
TiBr₃, Ti(SO₄)₂
Preference is given to one or several comprised by CuCl, CuCl2, ZnCl2, MgS04, AlCl3, CdS04, ZrC12, and Ti (S04)2.

8. In accordance with the preparation method of a high-voltage lithium battery cathode material described in **Claim 7,** wherein said: The preferable molar ratio of Mn: Ni: M in the above-described Step 1) is 1.5: (0.5-X): X, while the preferable parameter 0.05 <X ≤ 0.15, and the optimal parameter is 0.08 <X ≤ 0.12.

9. In accordance with the preparation method of a high-voltage lithium battery cathode material described in **Claim 8,** wherein said: The preferable concentration of metal ions in the soluble salt mixed aqueous solution I described in Step 1) is 0.8 ∼ 1.2 mol/L, while the optimal parameter is 1.0 mol/L.

10. In accordance with the preparation method of a high-voltage lithium battery cathode material described in **Claim 9,** wherein said: The preferable reaction ph value described in Step 3) is 10.0, and the preferable reaction temperature is 55 °C .

11. In accordance with the preparation method of a high-voltage lithium battery cathode material described in **Claim 10,** wherein said: The specific filtering process described in Step 4) is: apply certain pressure difference at both ends of the filtering media made of fabric or filter paper, and pour the mixture from the high-pressure side. Since the effect of the pressure difference, the aqueous solution will be run out from the low pressure side, while the solid products will be trapped in the filter media and accumulated until the end of the filtering process, so as to separate the solid-liquid mixture described in Step 3).
